# EUROPÄISCHE PATENTANMELDUNG

(11) **EP 4 049 533 A1**
(43) Veröffentlichungstag der Anmeldung: **31.08.2022**
(21) Anmeldenummer: 22158142.4
(22) Anmeldetag: 23.02.2022
(51) Int. Cl.: A01K 13/00

(54) **BEINSCHUTZGAMASCHE FÜR EIN NUTZTIER, INSBESONDERE FÜR EIN PFERD**

(30) Priorität: 24.02.2021 DE 202021100928 U; 16.02.2022 DE 102022103664
(71) Anmelder: Fokko Gerdes Nachf. Hilke Gerdes e.Kfr., 26465 Langeoog (DE)
(72) Erfinder: GERDES, Hilke Insa Karoline, 26465 Langeoog (DE)
(74) Vertreter: Jabbusch, Matthias

(57) **Zusammenfassung**

Bei einer Beinschutzgamasche (3) für ein Nutztier, insbesondere für ein Pferd, ist vorgesehen dass sie als Flächenelement mit mehreren Lagen (5, 6, 7) ausgebildet ist, wobei zumindest eine Lage (6) mit wenigstens einem in eine Richtung wirkendem elastischer Streckabschnitt (9) ausgerüstet ist und wobei die Lage (6) mit dem Streckabschnitt (9) mit zumindest einem Verschlusselement für die Beinschutzgamasche (3) ausgerüstet ist.

Diese Beinschutzgamasche lässt sich zum einen einfach und sicher anlegen, zudem hat sie eine ansehnliche estätische Anschauung nach außen.

## Beschreibung

Die Erfindung betrifft eine Beinschutzgamasche für ein Nutztier, insbesondere für ein Pferd.

Insbesondere Pferde werden gegenwärtig nicht mehr nur für Arbeitszwecke, sondern auch für sportliche und Freizeitaktivitäten eingesetzt. So hat sich ein Pferdesport entwickelt, der seit Jahrzehnten auch olympisch ist. Elemente dieses Pferdesportes umfassen auch das Springen von Pferd und Reiter über Hindernisse.

Gerade für derartige sportliche Aktivitäten sind Beinschutzgamaschen für Pferde vorgeschlagen worden, die grundsätzlich aber auch für andere Nutztiere geeignet sind. Bekannte Gamaschen bieten dabei einen Schutz gegen mechanische Beeinflussung aufgrund der Verwendung eines festeren Materials. Die bekannten Gamaschen lassen sich mit Klettverschlüssen verschließen und passen sich dadurch dem Nutztierbein an. Allerdings zeichnen sich bekannte Gamaschen dadurch aus, dass ihre äußere Gestaltung und insofern ihre Ästhetik vielen Reitern nicht gefällt. Gerade im Pferdedressurreitsport kommt es auf eine äußere ästhetische Anmutung an, dabei stören bekannte Gamaschen.

Bekannt sind auch auf ein Nutztierbein, insbesondere ein Pferdebein, aufrollbare und abrollbare Bandagen. Die Anlage ist nicht einfach, da beim Anlegen ein richtiges Zugkraftmaß eingesetzt werden muss, um einen zu losen Sitz der Bandage am Bein zu verhindern. Es darf aber auch kein Einschnüren der Beine auftreten. Allerdings zeigen Bandagen einen höheren ästhetischen Anschauungswert, so dass sie insbesondere bei Dressurreitern beliebt sind.

Der Erfindung liegt daher die Aufgabe zugrunde, eine Beinschutzgamasche der eingangs genannten Gattung aufzuzeigen, die sich zum einen einfach und sicher anlegen lässt und die eine ansehnliche ästhetische Anschauung nach außen hat.

Diese Aufgabe ist erfindungsgemäß dadurch gelöst worden, dass die Beinschutzgamasche als Flächenelement mit mehreren Lagen ausgebildet ist, wobei zumindest eine Lage mit wenigstens einem in eine Richtung wirkenden elastischen Streckabschnitt ausgerüstet ist und wobei diese Lage mit dem elastischen Streckabschnitt mit zumindest einem Verschlusselement für die Beinschutzgamasche ausgerüstet ist.

Die erfindungsgemäße Beinschutzgamasche ist als Flächenelement ausgebildet, dabei weist sie mehrere Lagen auf. Die mehreren Lagen liegen aufeinander, es gibt somit eine innere, dem Bein des Nutztieres zugeordnete Lage und eine äußere Lage. Aufgrund des Vorhandenseins voneinander verschiedener Lagen kann jede Lage an den jeweiligen Einsatzzweck angepasst werden. So kann für die dem Bein angenäherte Lage eine beinschonende Ausbildung vorgesehen sein. Eine äußere Lage kann dagegen auf die ästhetischen Erwartungen der zum Beispiel Reiter Rücksicht nehmen.

Damit die Beinschutzgamasche nicht zu locker sitzt und auch nicht zu stramm auf dem Bein des Nutztieres angeordnet wird, ist erfindungsgemäß der in eine Richtung wirkende Streckabschnitt vorgesehen. Der Streckabschnitt kann so angeordnet werden, dass seine Wirkrichtung mit Bezug auf das Bein des Nutztieres auf dem Umfang des Beines verläuft. So kann eine optimale Anpassung des Flächenelementes an das konkret zu schützende Bein des Nutztieres erfolgen. Hinzu kommt, dass sich ein Pferdebein während des Reitens um bis zum 5 mm ausdehnen und wieder zusammenziehen kann. Die Lage mit dem Streckabschnitt kann für diese Ausdehnung den notwendigen Raum geben, bei einem Zusammenziehen wird die Bandage wieder nachgeführt.

Die Lage mit dem Streckabschnitt weist zudem ein Verschlusselement für die Beinschutzgamasche auf. Die Beinschutzgamasche kann als offenes Flächenelement an das Bein des Nutztieres angelegt werden, anschließend wird sie mit dem Verschlusselement verschlossen, so dass sie dann einen festen Sitz am Bein des Nutztieres hat.

Nach einer ersten Weiterbildung der Erfindung ist vorgesehen, dass der elastische Streckabschnitt in die Lage des Flächenelementes eingearbeitet ist und sich durch diese Lage vollständig erstreckt. Die Elastizität der Beinschutzgamasche soll über die Lage mit dem Streckabschnitt vollständig, also auch über die gesamte Höhe der Beinschutzgamasche gegeben sein. Das wird mit der Erstreckung des elastischen Streckabschnittes erreicht. In besonderer Ausbildung kann die Lage des Flächenelementes den elastischen Streckabschnitt insgesamt ausbilden.

Die Lage mit dem Streckabschnitt erlaubt eine Anpassung an das Bein insbesondere eines Pferdes. Es erfolgt eine Positionierung an den Sehnenbändern des Pferdebeines unter Erfüllen einer medizinisch vorbeugenden Funktion. Beim reinen Bandagieren nach dem Stand der Technik liegt oft der Zug beim Anlegen der Bandage auf den Sehnen des Pferdebeines, besser wäre aber ein Anliegen des Zuges weiter vorn auf den Knochen des Pferdebeines. Bei dem erfindungsgemäßen Beinschutz kann der Streckabschnitt als besonders nachgiebiger Teil im in Laufrichtung hinteren Teil des angelegten Beinschutzes vorgesehen sein.

Das erfindungsgemäße Verschlusselement für die Beinschutzgamasche ist vorzugsweise ein Reißverschluss. Ein Reißverschluss ist einfach zu bedienen, er kann nach Anlegen der Beinschutzgamasche an das Bein des Nutztieres verschlossen werden. Während der Anordnung der Beinschutzgamasche am Bein des Nutztieres kann der Reißverschluss nach innen verlegt werden, so dass er die ästhetische Anmutung der erfindungsgemäßen Beinschutzgamasche nicht stört.

Nach einer nächsten Weiterbildung der Erfindung ist vorgesehen, dass die Beinschutzgamasche zumindest dreilagig ausgebildet ist, wobei die Lage mit dem Streckabschnitt eine Mittellage ist. Die Lage mit dem Streckabschnitt und mit dem Verschlusselement kann somit das stabile Grundelement für die erfindungsgemäße Beinschutzgamasche ausbilden. Die Lage mit dem Streckabschnitt liegt somit nicht direkt am Bein des Nutztieres an, zudem ist sie durch eine weitere äußere Lage kaschiert. Sowohl der Streckabschnitt als auch der Reißverschluss können mit der äußeren Lage abgedeckt sein.

Nach einer nächsten Weiterbildung der Erfindung ist vorgesehen, dass eine dem Nutztier anzunähernde Lage aus einem Bandagenstoffmaterial gefertigt ist. Dieses Material hat sich bereits bei den bekannten aufwickelbaren Bandagen als nutztierbeinschonend herausgestellt. Das Bandagenstoffmaterial gewährt insbesondere beim Reiten einen Schutz des Pferdebeines. Bei der erfindungsgemäßen Beinschutzgamasche ist das Bandagenstoffmaterial aber nicht auf das Bein des Nutztieres aufzuwickeln, es ist vielmehr Teil der mehrlagigen Beinschutzgamasche und wird mit dieser einfach an das Bein des Nutztieres angelegt oder von diesem abgenommen.

Die Lage mit dem Streckabschnitt ist nach einer Weiterbildung eine feste, elastische Stoffschicht. Diese Stoffschicht kann ähnlich wie bei den bekannten Gamaschen ausgebildet sein.

Dabei kann nach Weiterbildung der Erfindung vorgesehen sein, dass die Abmessungen der Lage mit dem Streckabschnitt kleiner als die Abmessungen der dem Nutztier angenäherten Lage sind. Damit ist sichergestellt, dass die festere Lage mit dem Streckabschnitt keinen Kontakt zum Bein des Nutztieres erhält. Keine Abschnitte dieser festeren Lage stehen über die Lage aus dem Bandagenstoffmaterial vor, vielmehr ist dieses weiter vorstehend ausgebildet.

Eine außen angeordnete Lage kann schließlich aus Stoffstreifen ausgebildet sein. Damit lässt sich eine gefällige Optik ausbilden. Die Stoffstreifen können beispielsweise als Fleece-Streifen ausgebildet sein. Die Fleece-Streifen können in vertikaler oder horizontaler Ausrichtung und insbesondere einander überlappend aufgebracht sein, um einen Bandagenlook zu erzeugen.

Schließlich kann noch vorgesehen sein, dass die einzelnen Lagen der Beinschutzgamasche miteinander vernäht sind oder auch aufeinander genäht sind. Andere Verbindungsverfahren sind natürlich möglich.

Dabei kann auch vorgesehen sein, dass die einzelnen Lagen der Beinschutzgamasche voneinander lösbar verbunden sind. So ist es möglich, beispielsweise eine bestimmte Außenlage und Mittellage mit mehreren, gegeneinander zu wechselnden Innenlagen zu verwenden. Gerade die Innenlage kann durch ein Vorstehen über die anderen Lagen hinaus auch zu einem ästhetischen Gesamteindruck beitragen, hier können voneinander verschiedene Innenlagen für voneinander verschiedene Einsatzzwecke beispielsweise im Training oder in einem Dressur-Wettbewerb eingesetzt werden. Auf diese Weise ist es auch möglich, voneinander verschiedene außen angeordnete Lagen einzusetzen.

Die lösbare Verbindung kann beispielsweise durch Klettverschlüsse oder auch durch Druckknöpfe oder Hakenelemente oder andere Elemente umgesetzt sein.

Ein Ausführungsbeispiel der Erfindung, aus dem sich weitere erfinderische Merkmale ergeben, ist in der Zeichnung dargestellt. Es zeigen:
- Figur 1:: eine erste Seitenansicht eines Pferdebeinabschnittes mit einer angelegten erfindungsgemäßen Beinschutzgamasche,
- Figur 2:: eine weitere Teilseitenansicht des Pferdebeins mit der Beinschutzgamasche gemäß Figur 1,
- Figur 3:: eine perspektivische Ansicht einer geöffneten Beinschutzgamasche gemäß Figur 1 und
- Figur 4:: eine perspektivische Ansicht einzelner Bauteile der Beinschutzgamasche gemäß Figur 1.

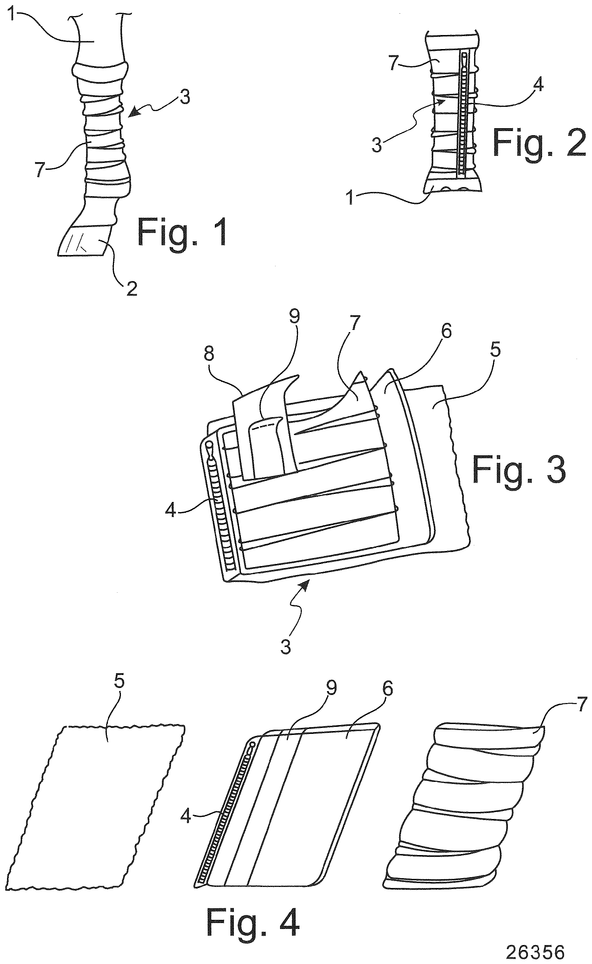

Figur 1 zeigt ein Pferdebein 1 mit einem auf dem Boden aufstellbaren Huf 2. An das Pferdebein 1 ist in Annäherung an den Huf 2 eine Beinschutzgamasche 3 angelegt.

Figur 2 zeigt, dass die Beinschutzgamasche 3 mit einem vertikal verlaufenden Reißverschluss 4 geschlossen ist.

Der Reißverschluss 4 ist in der geöffneten Beinschutzgamasche 3 in Figur 3 am linken Rand erkennbar. Figur 3 zeigt, dass die Beinschutzgamasche 3 aus drei Lagen ausgebildet ist. Die zuunterst liegende Lage 5 wird dem Bein des Nutztiers angenähert. Die darauffolgende Lage 6 ist eine Mittellage, während eine obenliegende Lage 7 eine Abdecklage ist. Ein Ausschnitt 8 in der oberen Lage 7 zeigt, dass in der mittleren Lage 6 ein Streckabschnitt 9 angeordnet ist. Dieser Streckabschnitt 9 kann aus einem elastischen Material wie Gummi gefertigt sein, er ist in die Lage 6 eingearbeitet. Die einzelnen Lagen 5, 6, 7 sind miteinander vernäht.

Figur 4 zeigt die einzelnen Lagen 5, 6, 7 der erfindungsgemäßen Beinschutzgamasche 3. Die dem Bein 1 des Nutztieres anzunähernde Lage 5 ist aus einem Bandagenstoffmaterial gefertigt. Dieses ist weich und anschmiegsam und kann sich also direkt an das Pferdebein 1 anlegen. Die Mittellage 6 trägt den Streckabschnitt 9 sowie den Reißverschluss 4. Diese Lage 6 ist somit eine Funktionslage, welche eine elastische Streckung der Beinschutzgamasche 3 und ihren Verschluss nach Anlage an das Bein 1 mit dem Reißverschluss 4 gewährleistet. Die Lage 6 ist aus einem festen, elastischen Stoffmaterial ausgebildet.

Die außenliegende Lage 7 dient schließlich ästhetischen Ansprüchen. Sie ist aus Stoffstreifen ausgebildet, die gewickelt sind. Es kann sich beispielsweise um Fleece-Streifen handeln, die durch ein teilweises Aufeinanderliegen einen Bandagenlook ausbilden.

## Patentansprüche

1. Beinschutzgamasche für ein Nutztier, insbesondere für ein Pferd,
**dadurch gekennzeichnet,**
**dass** sie als Flächenelement mit mehreren Lagen (5, 6, 7) ausgebildet ist, wobei zumindest eine Lage (6) mit wenigstens einem in eine Richtung wirkendem elastischer Streckabschnitt (9) ausgerüstet ist und wobei die Lage (6) mit dem Streckabschnitt (9) mit zumindest einem Verschlusselement für die Beinschutzgamasche (3) ausgerüstet ist.

2. Beinschutzgamasche nach Anspruch 1, **dadurch gekennzeichnet, dass** der elastische Streckabschnitt (9) in die Lage (6) des Flächenelementes eingearbeitet ist und sich durch diese Lage vollständig erstreckt.

3. Beinschutzgamasche nach Anspruch 1 oder 2, **dadurch gekennzeichnet, dass** der elastische Streckabschnitt (9) durch die Lage (6) selbst insgesamt ausgebildet ist.

4. Beinschutzgamasche nach einem der vorhergehenden Ansprüche, **dadurch gekennzeichnet, dass** das Verschlusselement ein Reißverschluss (4) ist.

5. Beinschutzgamasche nach einem der vorhergehenden Ansprüche, **dadurch gekennzeichnet, dass** sie zumindest dreilagig ausgebildet ist, wobei die Lage mit dem Streckabschnitt eine Mittellage (6) ist.

6. Beinschutzgamasche nach Anspruch 5, **dadurch gekennzeichnet, dass** eine dem Nutztier anzunähernde Lage (5) aus einem Bandagenstoffmaterial gefertigt ist.

7. Beinschutzgamasche nach Anspruch 5 oder 6, **dadurch gekennzeichnet, dass** die Lage (6) mit dem Streckabschnitt (9) eine feste, elastische Stoffschicht ist.

8. Beinschutzgamasche nach Anspruch 7, **dadurch gekennzeichnet, dass** die Abmessungen der Lage (6) mit dem Streckabschnitt (9) kleiner als die Abmessungen der dem Nutztier angenäherten Lage (5) sind.

9. Beinschutzgamasche nach einem der Ansprüche 6 bis 8, **dadurch gekennzeichnet, dass** eine außen angeordnete Lage (7) aus Stoffstreifen ausgebildet ist.

10. Beinschutzgamasche nach Anspruch 9, **dadurch gekennzeichnet, dass** die Stoffstreifen als Fleece-Streifen ausgebildet sind.

11. Beinschutzgamasche nach einem der Ansprüche 6 bis 10, **dadurch gekennzeichnet, dass** die einzelnen Lagen (5, 6, 7) miteinander vernäht oder aufeinander genäht sind.

12. Beinschutzgamasche nach einem der Ansprüche 6 bis 10, **dadurch gekennzeichnet, dass** die einzelnen Lagen (5, 6 ,7) miteinander voneinander lösbar verbunden sind.

13. Beinschutzgamaschen nach Anspruch 12, **dadurch gekennzeichnet, dass** die einzelnen Lagen (5, 6, 7) mit Klettverschlüssen miteinander verbunden sind.
